# EUROPÄISCHE PATENTANMELDUNG

(11) **EP 1 533 499 A1**
(43) Veröffentlichungstag der Anmeldung: **25.05.2005**
(21) Anmeldenummer: 04027041.5
(22) Anmeldetag: 13.11.2004
(51) Int. Cl.: F02D 35/00, F02D 35/02, F02D 41/02

(54) **Elektronisches Steuerungssystem einer Brennkraftmaschine**

(30) Priorität: 20.11.2003 DE 10354317
(71) Anmelder: DEUTZ Aktiengesellschaft, 51063 Köln (DE)
(72) Erfinder: Akbarian, Taghi, 51143 Köln (DE)

(57) **Zusammenfassung**

Verfahren wobei die Steuerung und Anpassung der Leistung mindestens in Abhängigkeit der Betriebsparameter:
- Atmosphärendruck,
- Ladelufttemperatur oder Sauglufttemperatur,
- Umgebungstemperatur,
- Kühlmitteltemperatur,
- Ladeluftdruck und
- Abgastemperatur.
erfolgt.

## Beschreibung

Die Erfindung betrifft ein Verfahren zum Betreiben einer Brennkraftmaschine mit einem elektronischen Regelsystem zur Steuerung der Kraftstoffeinspritzung, insbesondere der Kraftstoffeinspritzung in Abhängigkeit von Betriebsparametern.

Eine derartige Brennkraftmaschine ist aus der DE 199 53 767 C2 bekannt. Dabei weist diese Brennkraftmaschine zwei Regelsysteme zur Steuerung der Kraftstoffeinspritzung auf, wobei normalerweise die Leistung der Brennkraftmaschine von dem ersten Regler bestimmt wird. Beim Überschreiten eines max. zulässigen Motormoments am Abrieb erfolgt ein Wechsel in der Dominanz zum zweiten Regler, der das leistungsbestimmende Signal so lange reduziert, bis das max. zulässige Motormoment wieder unterschritten wird. Bei dem vorgegebenen max. Motormoment wird von dem tatsächlich bei Prüfstandsläufen ermittelten max. Motormoment einer Brennkraftmaschine der Baureihe ausgegangen, wobei der Anwendungszweck der Brennkraftmaschine berücksichtigt wird.

Der Erfindung liegt die Aufgabe zugrunde, ein Verfahren zum Betreiben einer Brennkraftmaschine mit einem elektronischen Regelsystem zur Steuerung der Kraftstoffeinspritzung anzugeben, das gegenüber dem Stand der Technik vereinfacht ist.

Diese Aufgabe wird dadurch gelöst, dass die in dem Regelsystem eingestellte max. Leistung der Brennkraftmaschine für normale Betriebsbedingungen und einen mittleren Lastfaktor freigegeben und zertifiziert wird. Während bisher jede Brennkraftmaschine gemäß ihrem Einsatzzweck zertifiziert wurde, ist dies nunmehr nicht mehr nötig, da die Steuerung und Anpassung der Leistung in Abhängigkeit von Betriebsparametern erfolgt. Dieses Verfahren kommt insbesondere bei Brennkraftmaschinen zum Einsatz, bei denen die Brennkraftmaschinen einer Baureihe für sehr unterschiedliche Anwendungen und Einsatzbedingungen eingesetzt werden. Solche Anwendungen und Einsatzbedingungen sind beispielsweise Baumaschinen unterschiedlichster Art, landwirtschaftliche Fahrzeuge wie Traktoren und Mähdrescher, Aggregate wie Pumpaggregate, Stromaggregate oder Notstromaggregate sowie Marineeinsätze und Nutzfahrzeuge. Bei all diesen verschiedenen Einsatzmöglichkeiten wird bisher eine auf den speziellen Anwendungsfall abgestimmte Leistungseinstellung vorgenommen, die dann auch individuell von entsprechenden Prüfinstituten zertifiziert werden muss.

In Weiterbildung der Erfindung erfolgt die Steuerung und Anpassung der Leistung in Abhängigkeit der Betriebsparameter:
- Atmosphärendruck,
- Ladelufttemperatur oder Sauglufttemperatur,
- Umgebungstemperatur,
- Kühlmitteltemperatur,
- Ladeluftdruck und
- Abgastemperatur.

Hier sind für die einzelnen Betriebsparameter Maximalwerte vorgegeben, wobei bei Überschreitung eines vorgegebenen Maximalwertes (oder Unterschreitung eines vorgegebenen Minimalwertes) die Leistung entsprechend der vorgegebenen Kennlinien oder Kennfelder in Abhängigkeit der betroffenen Brennkraftmaschinenparameter reduziert wird.

In weiterer Ausgestaltung erfolgt die Steuerung und Anpassung der Leistung in Abhängigkeit des Lastfaktors.

In Weiterbildung der Erfindung erfolgt eine Leistungssteuerung der Brennkraftmaschine in Abhängigkeit der Betriebsparameter und des Lastfaktors. Hierzu wird das von der Brennkraftmaschine abgegebene Motormoment kontinuierlich aufgenommen und einzelnen Sektoren unterhalb einer Dachkurve zugeordnet. Diese einzelnen Sektoren werden entsprechend dem abgegebenen Moment unterschiedlich bewertet und bestimmen das Maß und die Dauer der freigegebenen Maximalleistung.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen die
- Fig. 1: eine Lastkollektivsteuerung der Brennkraftmaschine,
- Fig. 2: eine Dachkurvensteuerung der Brennkraftmaschine mit unterschiedlichen Bewertungen,
- Fig. 3: eine Reduktion der Motorleistung in Abhängigkeit von der Temperatur linear oder in Abhängigkeit einer Funktion und
- Fig. 4: in Diagrammform die Leistungskorrektur in Abhängigkeit der Betriebsparameter.

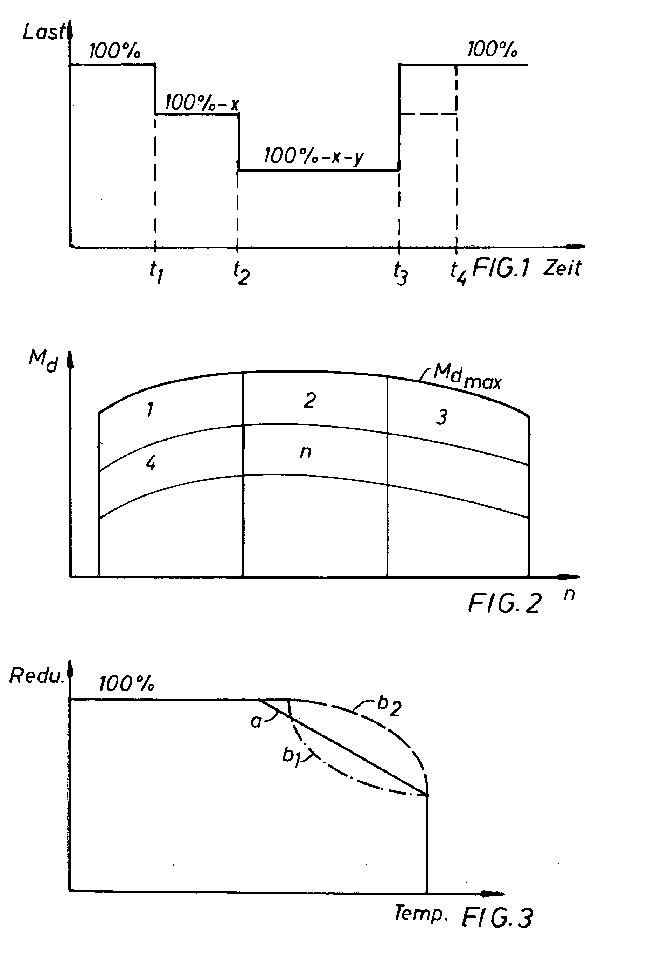

Gemäß dem Diagramm nach Fig. 1 ist die Last über der Zeit aufgetragen. Ausgehend von einem Lastkollektiv von 100 % wird nach einer ersten Zeitspanne eine Lastreduzierung auf 100 % - x eingestellt. Das System bestimmt aufgrund dieser Lastreduzierung 100 % - x gegebenenfalls noch eine weitere Lastreduzierung 100 % - x - y, die von dem Betreiber nach einer Zeitspanne t₂ angestellt wird, nach welcher Zeitspanne t₃ die Motorsteuerung wieder stufenweise die gesamte Leistung freigibt. Diese Steuerung erfolgt bewertet anhand der erzwungenen, gegebenenfalls mehreren, Leistungsreduzierungen. Zusätzlich oder alternativ erfolgt die Steuerung bewertet anhand von selbst vorgegebenen, ebenfalls gegebenenfalls mehreren, Leistungsreduzierungen. In dem Diagramm nach Fig. 2 ist die maximale Drehmomentkurve über der Drehzahl aufgetragen. Unter dieser max. Drehmomentkurve werden unterschiedliche Abschnitte 1, 2, 3, n eingeteilt, die unterschiedlich bewertet werden. Je nach dem, in welchem Bereich die Brennkraftmaschine längere Zeit betrieben wird, erfolgt eine Reduzierung der Leistung.

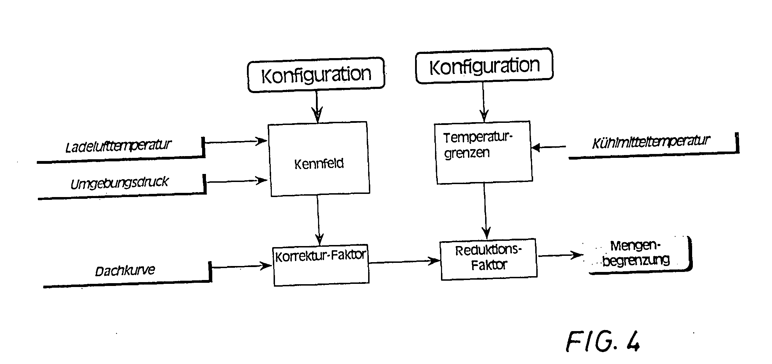

In dem Diagramm gemäß Fig. 3 ist die zu Fig. 4 unter "Erweiterung" dargestellte Reduzierung, ausgehend von 100 %, in Abhängigkeit von verschiedenen Kennlinien dargestellt. a) zeigt eine lineare Reduktion, b1) und b2) zeigen unterschiedliche Reduktionen in Abhängigkeit von unterschiedlichen Funktionen.

Gemäß Fig. 4 werden in einer Basiskonfiguration die Ladelufttemperatur und der Umgebungsdruck gemessen und anhand dieser Werte wird ein Kennfeld ausgewertet. Unter Einbezug einer Dachkurve wird damit ein Korrekturfaktor festgelegt. Dieser Korrekturfaktor bestimmt bei der Basiskonfiguration direkt die Einspritzmenge (Mengenbegrenzung). Bei einer Erweiterung, beispielsweise für eine höhere Leistungsfreigabe, sind Temperaturgrenzen, beispielsweise gemäß den Kennlinien nach Fig. 3, abgespeichert. Anhand der gemessenen Kühlmitteltemperatur werden diese Kennlinien ausgewertet und ein Reduktionsfaktor bestimmt, der zusätzlich zu dem Korrekturfaktor gemäß der Basiskonfiguration die Mengenbegrenzung einstellt.

## Patentansprüche

1. Verfahren zum Betreiben einer Brennkraftmaschine mit einem elektronischen Regelsystem zur Steuerung der Kraftstoffeinspritzung, insbesondere der Kraftstoffeinspritzung in Abhängigkeit von Betriebsparametern,
***dadurch gekennzeichnet, dass*** die in dem Regelsystem eingestellte Maximalleistung der Brennkraftmaschine für normale Betriebsbedingungen und einen mittleren Lastfaktor freigegeben und zertifiziert wird.

2. Verfahren nach Anspruch 1,
***dadurch gekennzeichnet, dass*** die Steuerung und Anpassung der Leistung mindestens in Abhängigkeit der Betriebsparameter:
- Atmosphärendruck,
- Ladelufttemperatur oder Sauglufttemperatur,
- Umgebungstemperatur,
- Kühlmitteltemperatur,
- Ladeluftdruck und
- Abgastemperatur.
erfolgt.

3. Verfahren nach Anspruch 1 oder 2,
***dadurch gekennzeichnet, dass*** die Steuerung und Anpassung der Leistung in Abhängigkeit des Lastfaktors erfolgt.

4. Verfahren nach den Ansprüchen 2 und 3,
***dadurch gekennzeichnet, dass*** eine Freigabe einer zeitlich limitierten Maximalleistung in Abhängigkeit der Betriebsparameter und des Lastfaktors erfolgt.
